# FASCICULE DE BREVET EUROPEEN

(11) **EP 3 484 814 B1**
(45) Date de publication et mention de la délivrance du brevet: **20.11.2019**
(21) Numéro de dépôt: 16781440.9
(22) Date de dépôt: 13.10.2016
(51) Int. Cl.: C01B 25/455, H01M 4/58, H01M 10/054

(54) **PROCEDE DE PREPARATION D'UN MATERIAU PARTICULAIRE NA3V2(PO4)2F3**
VERFAHREN ZUR HERSTELLUNG EINES PARTIKELFÖRMIGEN MATERIALS NA3V2(PO4)2F3
PROCESS FOR PREPARING A PARTICULATE MATERIAL NA3V2(PO4)2F3

(30) Priorité: 13.10.2015 FR 1559709
(43) Date de publication de la demande: 22.05.2019
(73) Titulaire: Commissariat à l'Énergie Atomique et aux Énergies Alternatives, 75015 Paris (FR); Centre National de la Recherche Scientifique (CNRS), 75016 Paris (FR); Université de Picardie Jules Verne, 80000 Amiens (FR)
(72) Inventeur: HALL, Nikita, 38000 Grenoble (FR); BOULINEAU, Sylvain, 80000 Amiens (FR); CROGUENNEC, Laurence, 33650 Saint Selve (FR); LAUNOIS, Sébastien, 38100 Grenoble (FR); MASQUELIER, Christian, 80440 Boves (FR); SIMONIN, Loïc, 38470 Vinay (FR)
(74) Mandataire: Lavoix
(86) Numéro de dépôt international: PCT/EP2016/074597
(87) Numéro de publication internationale: WO 2017/064189

(56) Documents cités:
- WO-A1-2015/067316
- US-B2- 6 872 492
- SERRAS PAULA ET AL: "Electrochemical performance of mixed valence Na3V2O2x(PO4)2F3-2x/C as cathode for sodium-ion batte", JOURNAL OF POWER SOURCES, vol. 241, 2013, pages 56-60, XP028675776, ISSN: 0378-7753, DOI: 10.1016/J.JPOWSOUR.2013.04.094
- CHIHARA K ET AL: "Cathode properties of Na3M2(PO4) 2F3 [M = Ti, Fe, V] for sodium-ion batteries", JOURNAL OF POWER SOURCES 2013 ELSEVIER NLD, vol. 227, 2013, pages 80-85, XP002759422, DOI: 10.1016/J.JPOWSOUR.2012.10.034 cité dans la demande
- M. BIANCHINI ET AL: "Na 3 V 2 (PO 4 ) 2 F 3 Revisited: A High-Resolution Diffraction Study", CHEMISTRY OF MATERIALS, vol. 26, no. 14, 22 juillet 2014 (2014-07-22), pages 4238-4247, XP055229830, US ISSN: 0897-4756, DOI: 10.1021/cm501644g
- SONG W ET AL: "Multifunctional dual Na3V2(PO4) 2F3 cathode for both lithium-ion and sodium-ion batteries", RSC ADVANCES 2014 ROYAL SOCIETY OF CHEMISTRY GBR, vol. 4, no. 22, 2014, pages 11375-11383, XP002759423, DOI: 10.1039/C3RA47878E

## Description

La présente invention se rapporte au domaine des batteries secondaires. Elle vise plus particulièrement à proposer un procédé de préparation d'un matériau actif pour électrodes secondaires et plus particulièrement pour des cathodes de batteries sodium-ion.

La demande en batteries lithium-ion s'est accrue ces dernières années au regard de leur application dans une grande variété de dispositifs électroniques comme les téléphones portables et véhicules électriques. Or, les composés à base de lithium sont relativement coûteux et les sources naturelles en lithium sont inégalement réparties sur la planète et peu accessibles car localisées dans un petit nombre de pays. Des alternatives à cet élément ont donc été recherchées. A cette fin, des batteries sodium-ion ont été développées. Le sodium est en effet très abondant et réparti de façon homogène, et est avantageusement non toxique et économiquement plus intéressant.

Toutefois, le potentiel redox du couple Na⁺/Na est (-2,71 V vs.ESH) et donc supérieur à celui du couple Li⁺/Li (-3,05V.vs ESH), pour une masse molaire triple. Ces spécificités rendent difficile le choix d'un matériau hôte. Récemment, le matériau NaVPO₄F a été proposé comme matériau cathodique pour les batteries sodium-ion. De même Na₃V₂(PO₄)₂F₃ s'est révélé être un matériau particulièrement intéressant au regard de ses performances électrochimiques.

Des procédés ont donc été développés pour préparer le matériau Na₃V₂(PO₄)₂F₃. Conventionnellement, il est procédé à la réduction de V₂O₅ en présence d'acide phosphorique ou d'un précurseur de ce dernier pour former du VPO₄ ce dernier étant ensuite calciné sous atmosphère inerte en présence de NaF pour former Na₃V₂(PO₄)₂F₃.

Concernant la première étape de réduction du V₂O₅, plusieurs alternatives sont actuellement disponibles. Toutefois, aucune d'entre elles n'est réellement extrapolable à la préparation de quantités significatives et donc appropriée à une mise en œuvre à l'échelle industrielle.

Ainsi, Barker et al. propose dans le brevet US 6 872 492 de réaliser la réduction de V₂O₅ en le mélangeant avec du NH₄H₂PO₄ et du noir de carbone. Ce procédé conventionnel utilise le carbone élémentaire à titre d'agent réducteur. Ce mode de réduction est encore dénommé réduction par carbothermie. La mise en œuvre de carbone élémentaire à titre d'agent réducteur est intéressante à deux titres. Tout d'abord, le carbone élémentaire, qui est naturellement un bon conducteur, s'avère un réducteur efficace à l'égard de V₂O₅. Par ailleurs sa mise en œuvre en excès conduit à la formation d'un matériau composite présentant de meilleures propriétés conductrices. Toutefois le matériau ainsi obtenu se présente sous la forme d'agrégats de particules primaires dont la taille est de plusieurs micromètres.

Il est également à noter qu'une grande intimité entre les précurseurs permet une meilleure réactivité lors du traitement thermique ainsi qu'une optimisation du rôle réducteur du carbone. A ces fins, ce procédé antérieur requiert deux étapes de compression : la première réalisée préalablement à la première réaction de calcination conduisant à la formation de VPO₄ permet de favoriser une réactivité entre les précurseurs et une réduction homogène par le carbone alors que la seconde, préalablement à la deuxième réaction de calcination conduisant à la formation de Na₃V₂(PO₄)₂F₃, favorise la réactivité et minimise tout contact avec l'atmosphère qui risquerait d'être une source d'oxydation lors du recuit permettant la formation de Na₃V₂(PO₄)₂F₃ ou lors du refroidissement. Elle permet également d'éviter une croissance trop importante des particules primaires. Or ces étapes de compression sont précisément non souhaitables sur le plan industriel.

Par ailleurs et comme illustré en exemple 3 ci-après, la mise en œuvre d'une réduction par carbothermie sans étape de compression conduit à un matériau présentant des propriétés électrochimiques amoindries.

Une alternative à la réduction par carbothermie privilégie l'utilisation d'hydrogène à titre d'agent réducteur sous une forme diluée avec de l'argon. Ainsi, Chihara *et al.* (Réf. 1) considèrent une étape de réduction du V₂O₅ sous atmosphère d'argon diluée à 5 % volume d'hydrogène en présence de NH₄H₂PO₄. Le matériau VPO₄ ainsi formé est ensuite mélangé avec du NaF, et l'ensemble compacté puis calciné pour former le Na₃V₂(PO₄)₂F₃ attendu. Toutefois, une étape d'enrichissement en carbone de ce matériau Na₃V₂(PO₄)₂F₃ est ensuite nécessaire pour conférer à celui-ci des propriétés conductrices avantageuses. Cette variante de réalisation ne s'avère donc également pas propice à une mise en œuvre à l'échelle industrielle.

En conséquence, il demeure le besoin d'un procédé de préparation de Na₃V₂(PO₄)₂F₃ propice à une mise en œuvre à l'échelle industrielle et donc convenant à la fabrication de ce matériau à une échelle de production au moins égale à 100 g.

Il demeure également un besoin d'un procédé ne requérant pas d'étape de compression pour densifier les produits intermédiaires.

Il demeure également un besoin d'un procédé permettant d'accéder à un matériau Na₃V₂(PO₄)₂F₃ doté de performances électrochimiques avantageuses voire améliorées.

La présente invention a précisément pour objet de répondre à ces besoins.

Ainsi la présente invention concerne selon l'un de ses aspects, un procédé de préparation d'un matériau Na₃V₂(PO₄)₂F₃ comprenant au moins les étapes consistant à
a) réduire l'oxyde de vanadium, V₂O₅, sous une atmosphère réductrice en l'absence de carbone élémentaire et en présence d'au moins un précurseur d'anions phosphate pour former du phosphate de vanadium, VPO₄ et
b) exposer, sous atmosphère inerte, un mélange du matériau VPO₄ obtenu en étape a) avec une quantité efficace de fluorure de sodium, NaF, et d'au moins un composé hydrocarboné et oxygéné, source en carbone élémentaire, à des conditions de température propices à la calcination dudit mélange pour former ledit composé Na₃V₂(PO₄)₂F₃.

Selon le procédé de l'invention, le matériau Na₃V₂(PO₄)₂F₃ est obtenu à l'état pulvérulent. Plus précisément, le matériau Na₃V₂(PO₄)₂F₃ se présente sous la forme de particules primaires de dimension moyenne inférieure à 2 µm et qui sont constitutives d'agrégats.

De manière avantageuse, la dimension moyenne des agrégats est inférieure à 25 micromètres, de préférence inférieure à 10 micromètres, et en particulier comprise entre 3 et 10 micromètres, tandis que la dimension moyenne des particules primaires formant lesdits agrégats est comprise entre 200 nm et 2000 nm, de préférence entre 200 et 600 nm.

De manière inattendue, les inventeurs ont notamment constaté que la réalisation de l'étape de calcination de VPO₄ en présence de NaF et d'un précurseur organique de carbone élémentaire permet précisément de donner satisfaction à l'ensemble des attentes précitées.

Plus particulièrement, le matériau selon l'invention cristallise dans une maille orthorombique de groupe d'espace Aman avec les paramètres de maille suivants :
- a est compris entre 9,028 et 9,030, de préférence sensiblement égal à 9,029,
- b est compris entre 9,044 et 9,046, de préférence sensiblement égal à 9,045,
- c est supérieur ou égal à 10,749 et de préférence sensiblement égal à 10,751.

Tout d'abord, l'utilisation d'un tel précurseur organique permet de considérer une réduction du V₂O₅ sous une atmosphère réductrice et en l'absence de carbone élémentaire.

Le procédé selon l'invention permet de s'affranchir des opérations de compression mécanique classiquement requises et s'avère efficace pour produire des quantités de Na₃V₂(PO₄)₂F₃ allant au-delà de 100 g par lot de production ce qui le rend propice à une mise en œuvre à l'échelle industrielle.

Le matériau Na₃V₂(PO₄)₂F₃ obtenu selon l'invention possède avantageusement une taille particulaire significativement réduite comparativement à un matériau obtenu à l'issue d'un procédé requérant une réduction par carbothermie à l'échelle de 100 g et plus. Cette taille réduite est particulièrement intéressante pour la diffusion des ions dans le matériau lors de son usage à titre de matériau actif d'électrode.

Le matériau Na₃V₂(PO₄)₂F₃ obtenu selon l'invention possède avantageusement une surface spécifique BET au moins égale à 1m²/g et de préférence variant de 3m²/g à 20m²/g.

Par ailleurs, les particules primaires constitutives des agrégats composant le matériau Na₃V₂(PO₄)₂F₃ possèdent un enrobage en carbone élémentaire qui permet d'accroître significativement les propriétés conductrices de celui-ci.

Enfin, l'atmosphère réductrice lors de la première étape permet d'accroître la réduction du V⁵⁺ en V³⁺ et la présence d'un précurseur de carbone élémentaire lors de la deuxième étape permet de limiter au maximum l'oxydation des ions V³⁺ en V⁴⁺ et de limiter la croissance des particules primaires ainsi d'accroître les performances électrochimiques du matériau.

De manière inattendue, le procédé selon l'invention permet donc d'accéder à un matériau Na₃V₂(PO₄)₂F₃ de haute teneur en ions V³⁺ ou encore de faible teneur en V⁴⁺. Les performances électrochimiques du matériau obtenu selon l'invention, en lien avec cette teneur accrue en en ions V³⁺ et en lien avec la faible teneur en V⁴⁺ sont en particulier vérifiées en exemple 3.

Ainsi, selon un autre de ses aspects, la présente invention concerne un matériau Na₃V₂(PO₄)₂F₃ formé de particules primaires dont la taille moyenne est inférieure à 2 µm, notamment comprise entre 200 nm et 2000 nm, de préférence inférieure à 1 µm, et encore plus particulièrement comprise entre 200 et 600 nm, et revêtues en surface de carbone conducteur.

Le matériau Na₃V₂(PO₄)₂F₃ selon l'invention présente plus particulièrement une maille orthorombique de groupe d'espace Aman avec les paramètres de maille suivants :
- a est compris entre 9,028 et 9,030, de préférence sensiblement égal à 9,029,
- b est compris entre 9,044 et 9,046, de préférence sensiblement égal à 9,045,
- c est supérieur ou égal à 10,749 et de préférence sensiblement égal à 10,751.

Le carbone conducteur est présent à raison de 0,5 à 5 % en poids et de préférence de 1 à 3 % en poids du poids total du matériau.

Les particules primaires sont présentes au sein du matériau sous forme d'agrégats.

De tels composés s'avèrent particulièrement avantageux comme matériaux actifs d'électrodes pour des batteries secondaires en particulier au sodium ou sodium-ion.

Ainsi, l'invention concerne également, selon un autre de ses aspects, l'utilisation d'un composé selon l'invention comme matériau d'électrode, en particulier matériau d'électrode positive pour batterie sodium ou sodium-ion. Elle porte également sur un tel matériau d'électrode et sur l'électrode ainsi formée. L'invention a enfin pour objet une batterie au sodium ou sodium-ion comprenant un matériau d'électrode tel que précédemment défini.

L'électrode comprend un matériau Na₃V₂(PO₄)₂F₃ obtenu selon l'invention, un polymère ou liant et éventuellement un composé conducteur additionnel tel un composé carboné.

La mise en œuvre des composés selon l'invention comme matériau d'électrode s'avère avantageuse à plusieurs titres.

Tout d'abord, les électrodes formées selon l'invention présentent une bonne flexibilité et légèreté, propriétés particulièrement recherchées pour la réalisation d'accumulateurs.

Elles présentent une très bonne stabilité chimique, thermique et électrochimique.

D'autres caractéristiques, variantes et avantages des composés selon l'invention, de leur préparation et de leur mise en œuvre ressortiront mieux à la lecture de la description, des exemples et figures qui vont suivre, donnés à titre illustratif et non limitatif de l'invention.

### PROCEDE DE PREPARATION SELON L'INVENTION

### a) Réduction de l'oxyde de vanadium

Comme énoncé précédemment, la première étape du procédé requiert la réduction du matériau V₂O₅ sous une atmosphère réductrice.

Au sens de l'invention, l'atmosphère réductrice qualifie un gaz ou mélange gazeux aptes à procurer un effet réducteur à l'égard d'une réaction réalisée sous cette atmosphère.

Cette réduction est réalisée selon l'invention en l'absence de carbone élémentaire.

A ce titre, l'étape de réduction considérée selon l'invention est différente d'une réduction par carbothermie.

Elle ne met donc pas en œuvre à titre d'agent réducteur, dans les conditions expérimentales propices à la réduction de l'oxyde de vanadium, du carbone élémentaire à l'image notamment du noir de carbone.

De manière préférée, le procédé selon l'invention met en œuvre, à titre d'agent réducteur, du dihydrogène.

Ainsi, l'atmosphère réductrice considérée selon l'invention est avantageusement formée en tout ou partie d'hydrogène. Il peut ainsi s'agir de dihydrogène pur ou de dihydrogène dilué avec un ou plusieurs autres gaz inertes tel que par exemple l'argon ou l'azote.

Par exemple, il peut s'agir d'un mélange d'argon et de dihydrogène dans la proportion 98 % : 2 % en volume respectivement.

En ce qui concerne le précurseur anion phosphate, il s'agit d'un composé apte à générer des anions phosphate dans les conditions expérimentales de la réduction. D'une manière générale, il s'agit de sels ou composés associant à un ou plusieurs anions phosphate, un ou plusieurs cations tel qu'un métal alcalin, alcalinoterreux ou de transition ou encore un complexe cationique comme par exemple l'ion ammonium ou un ammonium quaternaire.

Au sens de l'invention, le composé source en anions phosphate peut notamment être choisi parmi H₃PO₄, H(NH₄)₂PO₄ et H₂NH₄PO₄. Préférentiellement, il s'agit de H₂NH₄PO₄.

En ce qui concerne la quantité en composé source en anions phosphate elle est bien entendu ajustée pour obtenir le dérivé VPO₄ attendu.

Les produits de départ, à savoir le V₂O₅ et le précurseur en anions phosphate sont mélangés et exposés à l'atmosphère réductrice retenue, de préférence de l'argon dilué à 2 % avec du dihydrogène, et l'ensemble chauffé jusqu'à une température propice à la réalisation de la réduction recherchée, généralement aux environs de 800 °C.

L'ajustement des paramètres expérimentaux, tels que vitesse de montée en température et durée de réaction relèvent clairement des compétences de l'homme de l'art.

Comme illustré en exemple 1 ci-après, le mélange en produits de départ peut être chauffé avec un flux de température de 10 °C/minute jusqu'à 800 °C et maintenu à cette température pendant 3 heures.

### b) Transformation du phosphate de vanadium en Na₃V₂(,PO₄,)₂F₃.

Le phosphate de vanadium obtenu à l'issue de l'étape de réduction est avantageusement consécutivement traité pour former le produit attendu.

Comme énoncé précédemment, le phosphate de vanadium obtenu selon l'invention ne requiert pas d'être compacté ou encore compressé pour accroître la densité de la poudre, préalablement à sa transformation en Na₃V₂(PO₄)₂F₃.

Le procédé selon l'invention est ainsi avantageusement dénué d'étapes de compression mécanique, notamment d'une étape de compression mécanique entre son étape de réduction de l'oxyde de vanadium en phosphate de vanadium et l'étape de transformation de celui-ci en composé attendu.

L'étape de transformation du phosphate de vanadium met en œuvre du fluorure de sodium comme source à la fois en ions sodium et en ion fluorure et au moins un composé hydrocarboné et oxygéné apte à générer du carbone élémentaire.

En ce qui concerne ce composé hydrocarboné et oxygéné, il peut notamment s'agir d'un sucre tel que par exemple le glucose, le saccharose et le fructose ou d'un carbohydrate tel que par exemple l'amidon ou un dérivé cellulosique.

Plus préférentiellement il s'agit d'un dérivé cellulosique et encore plus particulièrement de cellulose microcristalline.

Comme détaillé ci-dessus, la décomposition de ce composé hydrocarboné lors de la réaction du phosphate de vanadium VPO₄ avec NaF pour former Na₃V₂(PO₄)₂F₃ est dédiée d'une part à incorporer du carbone dans Na₃V₂(PO₄)₂F₃ et d'autre part à procurer une protection accrue aux ions vanadium V³⁺ contre un phénomène d'oxydation en V⁴⁺ durant le traitement thermique.

La présence de carbone au sein et en surface des agrégats constitutifs du matériau Na₃V₂(PO₄)₂F₃ permet d'augmenter ses performances conductrices.

Avantageusement, le carbone élémentaire figure au moins sous la forme d'un enrobage sur tout ou partie de la surface externe des particules primaires constitutives des agrégats formant le matériau Na₃V₂(PO₄)₂F₃.

La quantité et nature chimique du précurseur de carbone sont ajustées pour procurer cet enrobage dans les conditions expérimentales retenues pour la transformation du phosphate de vanadium. Cet ajustement relève clairement des compétences de l'homme de l'art.

Par exemple, dans le cas où ce dérivé est de la cellulose, celle-ci peut être mise en œuvre dans les proportions adéquates pour obtenir un enrobage de carbone représentant 0,5 à 5 % en poids, du poids total du matériau.

D'une manière générale, l'ensemble des matières premières dont le fluorure de sodium, NaF, sont mélangées et le mélange ainsi formé, chauffé sous atmosphère inerte dans des conditions de température et de durée de chauffage adaptées à la formation du matériau particulaire attendu Na₃V₂(PO₄)₂F₃ par calcination.

L'ajustement des paramètres opératoires, tels que par exemple température, vitesse de montée en température et temps de maintien en température relève clairement des compétences de l'homme de l'art.

A titre illustratif, la calcination recherchée peut être effectuée en chauffant, par exemple environ 1 heure, le mélange à 800 °C sous atmosphère inerte.

Le refroidissement du matériau Na₃V₂(PO₄)₂F₃ peut être rapide, et avantageusement est réalisé de manière immédiate par simple sortie du produit formé hors du four à 800 °C.

A l'issue du procédé selon l'invention, le matériau Na₃V₂(PO₄)₂F₃ est purifié. Cette étape de purification comprend généralement une opération de lavage à l'eau et une étape de séchage consécutive.

Ce matériau Na₃V₂(PO₄)₂F₃ est approprié à une utilisation en tant que matériau conducteur pour former des électrodes.

### MATERIAU Na₃V₂₍PO₄)₂F₃SELON L'INVENTION

Ce matériau selon l'invention est encore identifié sous la forme abrégée NVPF-H dans la suite de la description.

Comme évoqué ci-dessus, la présente invention vise également un matériau Na₃V₂(PO₄)₂F₃ formé de particules primaires de dimension moyenne est inférieure à 2 µm et revêtues en surface de carbone conducteur. Les particules primaires forment des agrégats, en particulier de taille moyenne inférieure à 25 micromètres, de préférence inférieure à 10 micromètres, et en particulier comprise entre 3 et 10 micromètres.

La taille particulaire moyenne peut être mesurée par microscopie électronique à balayage (MEB).

Le matériau Na₃V₂(PO₄)₂F₃ possède une surface spécifique BET au moins égale à 1 m²/g et de préférence variant de 3 m²/g à 20 m²/g.

Cette surface peut notamment être mesurée grâce à l'adsorption d'azote selon la technique BET (Brunauer, Emmett et Teller).

Avantageusement, le matériau de Na₃V₂(PO₄)₂F₃ selon l'invention possède de 0,5 à 5 % en poids et de préférence de 1 à 3 % en poids de carbone conducteur par rapport à son poids total.

Comme énoncé ci-dessus, ce carbone contribue aux performances conductrices du matériau grâce à sa conductivité naturelle.

Le matériau Na₃V₂(PO₄)₂F₃ selon l'invention possède en outre une pureté accrue au regard de sa haute teneur en ions V³⁺ ou encore sa faible teneur en V⁴⁺. Ce gain de pureté est notamment vérifié en exemple 3 à travers les performances électrochimiques du matériau obtenu selon l'invention.

Comme précisé dans la publication Paula Serras *et al.* (Réf. 2), la présence de cations V³⁺ et V⁴⁺ dans un matériau Na₃V₂(PO₄)₂F₃ est conventionnellement illustrée à l'aide de la formule chimique suivante Na₃V₂Oₓ(PO₄)₂F₃₋ₓ avec x variant de zéro à 2.

Lorsque x est égal à zéro cette formule est Na₃V₂(PO₄)₂F₃ et l'élément Vanadium y est présent sous la forme V³⁺.

Lorsque x est égal à 2 cette formule est Na₃(VO)₂(PO₄)₂F et l'élément Vanadium y est présent sous la forme V⁴⁺.

Dans la mesure où le vanadium est majoritairement présent sous la forme V³⁺ dans ce type de matériau, il est conventionnellement fait usage de la formule Na₃V₂(PO₄)₂F₃ pour le représenter.

Selon l'invention, le matériau Na₃V₂(PO₄)₂F₃ présente avantageusement une maille orthormbique de groupe d'espace Amam avec les paramètres de maille suivants :
- a est compris entre 9,028 et 9,030, de préférence sensiblement égal à 9,029
- b est compris entre 9,044 et 9,046, de préférence sensiblement égal à 9,045
- c est supérieur ou égal à 10,749 et de préférence sensiblement égal à 10,751

Dans le cadre de la présente invention, cette proportion en cation V⁴⁺ est significativement réduite par rapport aux mêmes matériaux existants. Ainsi un matériau selon l'invention possède avantageusement une teneur en cation V⁴⁺ au plus égale à 1 % en poids. Cette faible proportion peut notamment être représentée par un rapport molaire V⁴⁺/V³⁺ inférieur à 5 % et préférentiellement inférieur à 1 %.

### Matériau actif d'électrode

Comme précisé précédemment, le matériau Na₃V₂(PO₄)₂F₃ selon l'invention est particulièrement avantageux comme matériau actif d'électrode.

Ainsi, selon un autre de ses aspects, l'invention concerne également un matériau actif d'électrode comprenant au moins un matériau Na₃V₂(PO₄)₂F₃ conforme à l'invention.

Ce matériau peut être utilisé conjointement à un ou plusieurs composés additionnels classiquement mis en œuvre, comme par exemple un liant ou un additif conducteur.

Le ou lesdits additifs conducteurs électroniques peuvent être choisis parmi des fibres de carbone, du noir de carbone, des nanotubes de carbone, du graphène et leurs analogues

Le ou les liants peuvent être avantageusement choisi(s) parmi des liants fluorés, en particulier parmi le polytétrafluoroéthylène, le polyfluorure de vinylidène, les polymères dérivés de carboxyméthylcellulose, les polysaccharides et les latex notamment de type caoutchouc styrène-butadiène.

L'électrode ainsi préparée est déposée sur un collecteur de courant conducteur électronique. Ce collecteur peut être de l'aluminium.

De préférence, le matériau d'électrode représente de 10 % à 95 % en poids du poids total de l'électrode, en particulier plus de 40 % en poids, et plus particulièrement de 40 % à 80 % en poids, par rapport au poids total de ladite électrode.

Une électrode selon l'invention peut être utilisée comme électrode positive, d'un générateur au lithium ou sodium.

Avantageusement, elle est privilégiée pour une utilisation comme électrode positive pour une batterie secondaire au sodium ou sodium-ion.

Comme évoqué précédemment, la présente invention se rapporte également à une batterie secondaire au sodium comprenant une électrode selon l'invention.

Une batterie secondaire au sodium selon l'invention peut plus particulièrement comprendre une électrode positive selon l'invention et une électrode négative constituée par exemple de carbone désordonné préparée selon le même type de procédé que l'électrode positive. Celle-ci, contrairement à une batterie secondaire au lithium, peut être déposée sur un collecteur en aluminium compte tenu du fait que les ions sodium ne réagissent pas avec l'aluminium pour former un alliage, au contraire des ions lithium.

Le matériau de l'électrode négative peut être plus particulièrement un carbone désordonné de surface spécifique faible (< 10 m²/g) dont la granulométrie est de l'ordre du micromètre à la dizaine de micromètres. Il peut être choisi parmi les carbones durs (carbone non graphitisable) ou les carbones tendres (carbone graphitisable).

Dans le texte, les expressions « compris entre ... et ... » et « allant de ... à ... » et « variant de ... à ... » sont équivalentes et entendent signifier que les bornes sont incluses, sauf mention contraire.

Sauf indication contraire, l'expression « comportant/comprenant un(e) » doit être comprise comme « comportant/comprenant au moins un(e) ».

L'invention va maintenant être décrite au moyen des figures et exemples suivants donnés bien entendu à titre illustratif et non limitatif de l'invention.

### FIGURES

Figure 1 : Caractérisation par diffraction des Rayons X de Na₃V₂(PO₄)₂F₃ synthétisé en exemple 1 à partir de VPO₄ (réduction par H₂).
Figure 2 : Photo MEB du matériau Na₃V₂(PO₄)₂F₃ (NVPF-HC) conforme à l'invention obtenu selon l'exemple 1 par la voie Ar/H2/cellulose.
Figure 3 : Photo MEB du matériau Na₃V₂(PO₄)₂F₃ (NVPF-CB) non conforme à l'invention préparé par réduction carbothermique selon l'exemple 2.
Figure 4 : Performance électrochimique des matériaux NVPF-CB de l'exemple 2 (trait en gris foncé) et NVPF-HC de l'exemple 1 (trait en gris clair).

### REFERENCES BIBLIOGRAPHIQUES

Réf. 1 : Kuniko Chihara et al., Journal of Power Sources 227 (2013) 80-85
Réf. 2 : Paula Serras et al., J. Mater. Chem., 2012, 22, 22301

### MATERIEL ET METHODES

Les spectres RPE sont réalisés à l'aide d'un spectromètre Bruker EMX équipé d'une cavité ER-4192-ST et ER-4131 VT à 100 k.

La caractérisation MEB est réalisée à l'aide d'un microscope à balayage de type LEO 1530 de marque ZEISS.

Les caractérisations RX sont réalisées à l'aide d'un diffractomètre PANalytical Empyrean possédant une cathode en cuivre.

### EXEMPLE 1

VPO₄ est obtenu au préalable en réalisant un prémélange des précurseurs V₂O₅ (110 g) et NH₄H₂PO₄ (140 g) dans un broyeur. Le mélange ainsi obtenu est ensuite chauffé dans un four à une vitesse de chauffe de 10 °C/minute jusqu'à 800 °C et maintenu à cette température pendant 3 heures sous une atmosphère d'argon enrichie à 2 % H₂. La poudre grise ainsi obtenue a été caractérisée par diffraction des rayons X.

Le matériau Na₃V₂(PO₄)₂F₃ (>100g) a ensuite été préparé à partir d'un mélange du VPO₄ (160 g) tel que préparé ci-dessus, avec du NaF (70 g) dans les conditions stœchiométriques (2:3) et de cellulose (23 g). Ce mélange a été calciné sous atmosphère d'argon à 800 °C pendant 1 heure. A l'issue de cette étape de calcination le matériau obtenu est retiré du four à 800 °C pour le refroidir rapidement. Le matériau Na₃V₂(PO₄)₂F₃ (NVPF-HC) est ensuite lavé à l'eau et séché à 80 °C pendant 24 heures.

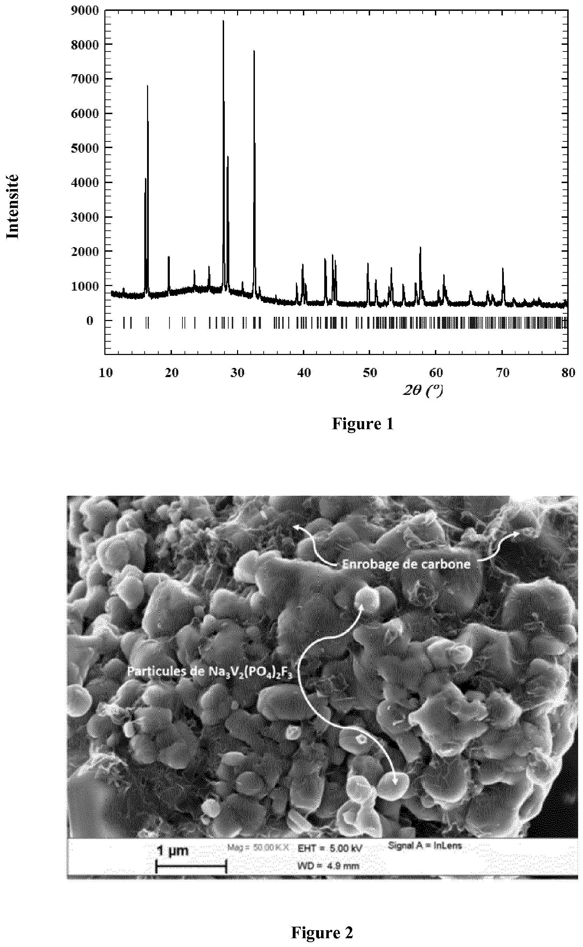

La figure 1 ci-après rend compte de la caractérisation par diffraction de rayons X de ce produit, indexé dans une maille orthorhombique (groupe d'espace Amam) de paramètres a = 9,02940(2) Å, b = 9,04483(2) Å et c = 10,75145(2) Å.

La figure 2 rend compte de la caractérisation par MEB de ce matériau conforme à l'invention.

### EXEMPLE 2 COMPARATIF

Un matériau Na₃V₂(PO₄)₂F₃ a également été préparé selon le protocole décrit en exemple 1 mais en privilégiant une réduction carbothermique. Il est encore appeler ci-après NVPF-CB.

La différence essentielle par rapport au protocole de l'exemple 1 consiste en l'utilisation de noir de carbone (TIMCAL super C65, 18 g) qui conduit à la formation d'un de carbone en surface particulaire du produit ainsi formé. Contrairement à l'invention, le carbone en surface des particules primaires se présente sous la forme d'un dépôt hétérogène et peu dense.

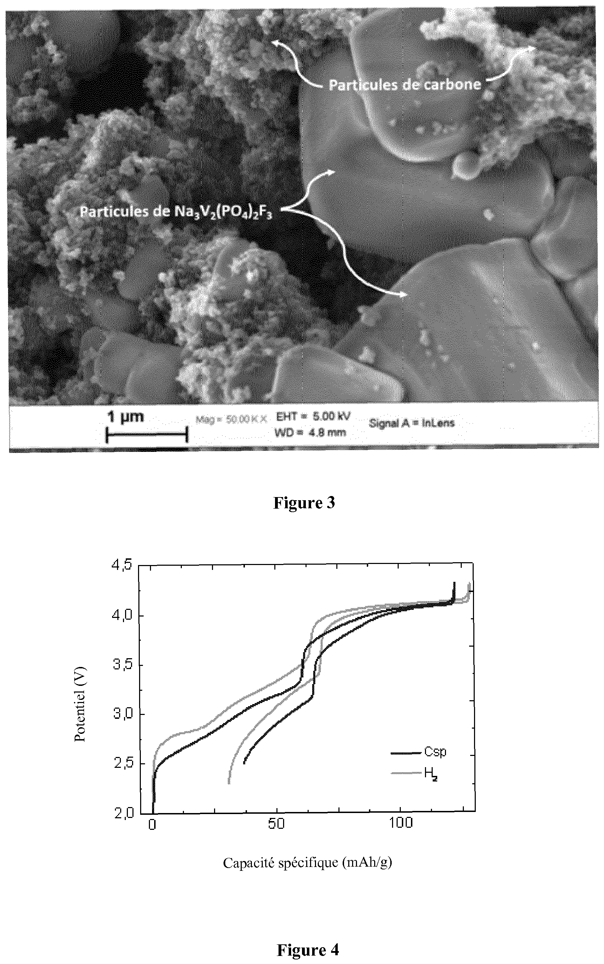

La figure 3 rend compte de la caractérisation par MEB de ce matériau.

### EXEMPLE 3 : CARACTERISATION DE Na₃V₂₍PO4)₂F₃ SELON L'INVENTION (NVPF-H) VERSUS Na₃V₂(PO₄)₂F₃ SELON L'EXEMPLE 2 (NVPF-CB).

La caractérisation de ces deux matériaux révèle un certain nombre de différences structurales et morphologiques dont les plus significatives sont décelables par spectroscopie RPE, DRX et MEB.

La comparaison des figures 2 et 3 permet de mettre en exergue ces différences.

Ainsi, l'analyse MEB révèle une nette différence en termes de taille des particules primaires et du revêtement de surface carboné de ces particules.

Les particules primaires du matériau synthétisé en utilisant du noir de carbone (NVPF-CB), possèdent une taille moyenne supérieure à 2 µm, tandis qu'elles sont inférieures à 2 micromètres, préférentiellement inférieure à 1 micromètre, de préférence encore comprise entre 200 et 600 nm pour les particules du matériau selon l'invention (NVPF-H).

La présence d'un enrobage carboné est également notée.

Il est également observé par analyse granulométrique au laser (Appareil de mesure : MALVERN MASTERSIZER S modèle MSS) que les agglomérats du matériau NVPF-CB possèdent un diamètre volumique moyen d(v0.5) nettement supérieur à 25 µm. En revanche, le diamètre volumique moyen d(v0.5) des agglomérats du matériau selon l'invention est inférieur à 10 µm.

Une différence significative entre les deux matériaux est également observée par comparaison de leurs spectres RPE respectifs.

Le matériau NVPF-H révèle avantageusement une teneur V³⁺ nettement plus élevée, et en particulier supérieure ou égale à 99 %.

Comme détaillé dans la description, une teneur en V⁴⁺ est attribuée à l'espèce oxydée de Na₃V₂(PO₄)₂F₃ qui est Na₃V₂Ox(PO₄)₂F₃₋ₓ.

Cette espèce oxydée a été caractérisée par Seras *et. al.* (ref. 2). L'incorporation d'un matériau source en carbone lors de la seconde étape de synthèse, et qui conduit à la formation d'un enrobage carboné des particules primaires protège manifestement efficacement le Na₃V₂(PO₄)₂F₃ du phénomène d'oxydation en Na₃V₂Ox(PO₄)₂F₃₋ₓ.

Il est noté que le matériau NVPF-CB possède en revanche une teneur en V⁴⁺ de l'ordre de 1 à 5 %.

Ces résultats révèlent donc bien l'intérêt du procédé selon l'invention qui permet de s'affranchir des étapes de compression non envisageable à l'échelle d'une production industrielle, tout en garantissant l'obtention d'un matériau NVPF-H de teneur en V⁴⁺ peu élevée car au plus égale à 10 %.

Les performances électrochimiques des deux matériaux ont également été testées en mode galvanostatique à une densité de courant constante de 12,8 mA/g entre les borne de tensions 2V et 4,3V. La figure 4 rend compte de ces mesures.

La capacité spécifique ainsi que l'irréversibilité au premier cycle de chaque matériau ont étés déterminés dans une pile bouton en utilisant une électrode de carbone dur à titre d'anode.

Il ressort que les matériaux NVPF-CB et NVPF-H ont respectivement une capacité spécifique initiale de 122 mAh/g et 128 mAh/g et une irréversibilité de 30 % et 23 %.

## Revendications

1. Procédé de préparation d'un matériau Na₃V₂(PO₄)₂F₃ comprenant au moins les étapes consistant à :
a) réduire l'oxyde de vanadium, V₂O₅, sous une atmosphère réductrice en l'absence de carbone élémentaire et en présence d'au moins un précurseur d'anions phosphate pour former du phosphate de vanadium,VPO₄, et
b) exposer, sous atmosphère inerte, un mélange du matériau VPO₄ obtenu en étape a) avec une quantité efficace de fluorure de sodium, NaF, et d'au moins un composé hydrocarboné et oxygéné, source en carbone élémentaire, à des conditions de température propices à la calcination dudit mélange pour former ledit composé Na₃V₂(PO₄)₂F₃.

2. Procédé selon la revendication précédente dans lequel l'atmosphère réductrice met en œuvre à titre d'agent réducteur du dihydrogène, en particulier l'étape a) étant réalisée sous atmosphère d'argon dilué à 2 % avec du dihydrogène, et à une température d'environ de 800 °C.

3. Procédé selon la revendication 1 ou 2, dans lequel le précurseur d'anion phosphate est choisi parmi H₃PO₄, H(NH₄)₂PO₄ et H₂NH₄PO₄ et de préférence est le H₂NH₄PO₄.

4. Procédé selon l'une quelconque des revendications précédentes, dans lequel le composé hydrocarboné et oxygéné de l'étape b) est choisi parmi les sucres et les carbohydrates et en particulier est un dérivé cellulosique.

5. Procédé selon l'une quelconque des revendications précédentes, dans lequel la calcination de l'étape b) est réalisée à 800 °C sous atmosphère inerte.

6. Procédé selon l'une quelconque des revendications précédentes, **caractérisé en ce qu'**il est dénué d'une étape de compression mécanique entre son étape a) et son étape b).

7. Procédé selon l'une quelconque des revendications précédentes, **caractérisé en ce que** le matériau Na₃V₂(PO₄)₂F₃ se présente sous la forme de particules primaires de dimension moyenne inférieure à 2 µm et qui sont constitutives d'agrégats.

8. Matériau Na₃V₂(PO₄)₂F₃ formé de particules primaires de dimension moyenne inférieure à 2 µm, notamment comprise entre 200 nm et 2000 nm, de préférence inférieure à 1 µm, et encore plus particulièrement comprise entre 200 et 600 nm et revêtues en surface de carbone conducteur,
ledit matériau présentant une maille orthorombique de groupe d'espace Aman avec les paramètres de maille suivants :
- a est compris entre 9,028 et 9,030, de préférence sensiblement égal à 9,029,
- b est compris entre 9,044 et 9,046, de préférence sensiblement égal à 9,045,
- c est supérieur ou égal à 10,749 et de préférence sensiblement égal à 10,751.

9. Matériau selon la revendication précédente, possédant de 0,5 à 5% en poids et de préférence de 1 à 3 % en poids de carbone conducteur par rapport à son poids total.

10. Matériau selon l'une des revendications 8 ou 9, dans lequel les particules sont sous la forme d'agrégats, en particulier de taille moyenne inférieure à 25 µm, de préférence inférieure à 10 µm, et en particulier comprise entre 3 et 10 µm.

11. Matériau selon l'une quelconque des revendications 8 à 10, possédant une surface spécifique BET au moins égale à 1 m²/g et de préférence variant de 3 m²/g à 20m²/g et/ou une teneur en cation V⁴⁺ au plus égale à 1 % en poids.

12. Matériau selon l'une quelconque des revendications 8 à 11 obtenu selon le procédé tel que défini selon l'une quelconque des revendications 1 à 7.

13. Utilisation d'un matériau tel que défini selon l'une quelconque des revendications 8 à 12 comme matériau actif d'électrode.

14. Matériau actif d'électrode comprenant au moins un matériau tel que défini selon l'une quelconque des revendications 8 à 12.

15. Electrode formée en tout ou partie d'un matériau tel que défini en revendications 8 à 12, ladite électrode comprenant en particulier en outre un polymère ou liant et éventuellement un composé conducteur additionnel tel un composé carboné.

16. Batterie secondaire au sodium ou sodium-ion comprenant une électrode selon la revendication 15.

## Patentansprüche

1. Verfahren zur Herstellung eines Na₃V₂(PO₄)₂F₃-Materials, aufweisend mindestens die Schritte bestehend aus:
a) Reduzieren des Vanadiumoxids, V₂O₅, in einer reduzierenden Atmosphäre in Abwesenheit von elementarem Kohlenstoff und in Gegenwart von mindestens einem Phosphatanionenvorläufer, um Vanadiumphosphat, VPO₄, zu bilden, und
b) Aussetzen, unter einer inerten Atmosphäre, einer Mischung des in Schritt a) erhaltenen VPO₄-Materials mit einer wirksamen Menge von Natriumfluorid, NaF, und von mindestens einer kohlenwasserstoff- und sauerstoffhaltigen Verbindung, die eine Quelle für elementaren Kohlenstoff ist, Temperaturbedingungen, die zum Kalzinieren der Mischung geeignet sind, um die Verbindung Na₃V₂(PO₄)₂F₃ zu bilden.

2. Verfahren nach dem vorhergehenden Anspruch, wobei die reduzierende Atmosphäre als Reduktionsmittel Dihydrogen verwendet, wobei der Schritt a) insbesondere in einer Atmosphäre von Argon, der auf 2% mit Dihydrogen verdünnt ist, und bei einer Temperatur von ungefähr 800 °C durchgeführt wird.

3. Verfahren nach Anspruch 1 oder 2, wobei der Phosphatanionenvorläufer aus H3PO4, H(NH₄)₂PO₄ und H₂NH₄PO₄ ausgewählt ist und vorzugsweise H₂NH₄PO₄ ist.

4. Verfahren nach einem der vorhergehenden Ansprüche, wobei die von Schritt b) kohlenwasserstoff- und sauerstoffhaltige Verbindung aus Zuckern und Kohlenhydraten ausgewählt ist und insbesondere ein Cellulosederivat ist.

5. Verfahren nach einem der vorhergehenden Ansprüche, wobei das von Schritt b) Kalzinieren bei 800 °C unter einer inerten Atmosphäre durchgeführt wird.

6. Verfahren nach einem der vorhergehenden Ansprüche, **dadurch gekennzeichnet, dass** es zwischen seinem Schritt a) und seinem Schritt b) frei von einem mechanischen Kompressionsschritt ist.

7. Verfahren nach einem der vorhergehenden Ansprüche, **dadurch gekennzeichnet, dass** das Material Na₃V₂(PO₄)₂F₃ in Form von primären Teilchen mit einer mittleren Größe von weniger als 2 µm vorliegt, die Aggregate bilden.

8. Material Na₃V₂(PO₄)₂F₃ aus primären Teilchen von mittlerer Größe kleiner als 2 µm, insbesondere zwischen 200 nm und 2000 nm, vorzugsweise kleiner als 1 µm und noch insbesondere zwischen 200 und 600 nm, die mit leitendem Kohlenstoff oberflächenbeschichtet sind,
wobei das Material ein orthorhombisches Gitter der Amam-Spaltgruppe mit folgenden Maschenparametern aufweist:
- a liegt zwischen 9,028 und 9,030, vorzugsweise ist im Wesentlichen gleich 9,029,
- b liegt zwischen 9,044 und 9,046, vorzugsweise ist im Wesentlichen gleich 9,045,
- c ist größer oder gleich 10,749 und vorzugsweise ist im Wesentlichen gleich 10,751.

9. Material nach dem vorhergehenden Anspruch, aufweisend von 0,5 bis 5 Gew.-% und vorzugsweise von 1 bis 3 Gew.-% leitendem Kohlenstoff in Bezug auf sein Gesamtgewicht.

10. Material nach einem der Ansprüche 8 oder 9, wobei die Teilchen in Form von Aggregaten sind, insbesondere mit einer mittleren Größe kleiner als 25 µm, vorzugsweise kleiner als 10 µm, und insbesondere zwischen 3 und 10 µm.

11. Material nach einem der Ansprüche 8 bis 10, die eine spezifische BET-Oberfläche von mindestens 1 m²/g und vorzugsweise im Bereich von 3 m²/g bis 20 m² / g und/oder einen Gehalt an V⁴⁺-Kationen höchstens gleich 1 Gew.-% aufweist.

12. Material nach einem der Ansprüche 8 bis 11, erhalten nach dem Verfahren nach einem der Ansprüche 1 bis 7.

13. Verwendung eines Materials wie definiert in einem der Ansprüche 8 bis 12 als aktives Elektrodenmaterial.

14. Aktives Elektrodenmaterial, aufweisend mindestens ein Material wie in einem der Ansprüchen 8 bis 12 definiert.

15. Elektrode, die ganz oder teilweise aus einem Material gebildet ist, wie es in den Ansprüchen 8 bis 12 definiert ist, wobei die Elektrode insbesondere ferner ein Polymer oder Bindemittel und gegebenenfalls eine zusätzliche leitfähige Verbindung wie eine Kohlenstoffverbindung aufweist.

16. Natrium- oder Natriumionensekundärbatterie, aufweisend eine Elektrode nach Anspruch 15.

## Claims

1. Method for preparing a material Na₃V₂(PO₄)₂F₃ comprising at least the steps consisting of:
a) reducing vanadium oxide, V₂O₅, under a reductive atmosphere in the absence of elementary carbon and in the presence of at least one phosphate anion precursor in order to form vanadium phosphate, VPO₄, and
b) exposing, under an inert atmosphere, a mixture of the material VPO₄ obtained in step a) with an effective quantity of sodium fluoride, NaF, and of at least one hydrocarbonated and oxygenated compound, a source of elementary carbon, to temperature conditions suitable for calcination of said mixture in order to form said compound Na₃V₂(PO₄)₂F₃.

2. Method according to the preceding claim, in which the reductive atmosphere uses, as reductive agent, dihydrogen, in particular step a) being produced under an argon atmosphere diluted to 2% with dihydrogen, and at a temperature of approx. 800°C.

3. Method according to claim 1 or 2, in which the phosphate anion precursor is chosen from H₃PO₄, H(NH₄)₂PO₄ and H₂NH₄PO₄ and preferably is H₂NH₄PO₄.

4. Method according to any of the preceding claims, in which the hydrocarbonated and oxygenated compound of step b) is chosen from sugars and carbohydrates and in particular is a cellulose derivative.

5. Method according to any of the preceding claims, in which the calcination of step (b) is produced at 800°C under an inert atmosphere.

6. Method according to any of the preceding claims, **characterised in that** it is devoid of a mechanical compression step between step a) thereof and step b) thereof.

7. Method according to any of the preceding claims, **characterised in that** the material Na₃V₂(PO₄)₂F₃ is present in the form of primary particles of an average dimension less than 2 µm and which are in the form of aggregates.

8. Material Na₃V₂(PO₄)₂F₃ formed from primary particles of an average dimension less than 2 µm, in particular between 200 nm and 2,000 nm, preferably less than 1 µm, and even more particularly between 200 and 600 nm and surface-coated with conductive carbon, said material having an orthorhombic mesh of spatial group Aman with the following mesh parameters:
- a is between 9.028 and 9.030, preferably substantially equal to 9.029,
- b is between 9.044 and 9.046, preferably substantially equal to 9.045,
- c is greater than or equal to 10.749 and preferably substantially equal to 10.751.

9. Material according to the preceding claim, having from 0.5 to 5% by weight and preferably from 1 to 3% by weight of conductive carbon relative to its total weight.

10. Material according to one of the claims 8 or 9, in which the particles are in the form of aggregates, in particular of an average size less than 25 µm, preferably less than 10 µm and in particular between 3 and 10 µm.

11. Material according to any of the claims 8 to 10, having a specific surface BET at least equal to 1 m²/g, preferably varying from 3 m²/g to 20 m²/g and/or a content of cations V⁴⁺ at most equal to 1% by weight.

12. Material according to any of the claims 8 to 11, obtained according to the method as defined according to any of the claims 1 to 7.

13. Use of a material as defined according to any of the claims 8 to 12 as active electrode material.

14. Active electrode material comprising at least one material as defined according to any of the claims 8 to 12.

15. Electrode formed in total or in part from a material as defined in claims 8 to 12, said electrode comprising in particular, in addition, a polymer or binder and possibly an additional conductive compound, such as a carbonated compound.

16. Secondary sodium or sodium-ion battery comprising an electrode according to claim 15.
